# EUROPEAN PATENT APPLICATION

(11) **EP 4 328 791 A1**
(43) Date of publication of application: **28.02.2024**
(21) Application number: 23754098.4
(22) Date of filing: 23.06.2023
(51) Int. Cl.: G06K 7/00, G06K 17/00, H01R 12/71

(54) **ELECTRONIC DEVICE HAVING STATIC ELECTRICITY REMOVAL TERMINAL**

(30) Priority: 23.06.2022 KR 20220077072; 26.08.2022 KR 20220107722
(71) Applicant: Samsung Electronics Co., Ltd., Suwon-si, Gyeonggi-do 16677 (KR)
(72) Inventor: LIM, Kyuhwan, Suwon-si, Gyeonggi-do 16677 (KR); KIM, Kihyun, Suwon-si, Gyeonggi-do 16677 (KR); PARK, Jonghun, Suwon-si, Gyeonggi-do 16677 (KR); YANG, Jungmin, Suwon-si, Gyeonggi-do 16677 (KR); YOON, Hyunseung, Suwon-si, Gyeonggi-do 16677 (KR)
(74) Representative: Gulde & Partner
(86) International application number: PCT/KR2023/008766
(87) International publication number: WO 2023/249454

(57) **Abstract**

An electronic device according to various embodiments is an electronic device into which an IC card including at least one contact pad on a first surface is inserted in a first direction. The electronic device may include a substrate, at least one terminal provided on a surface of the substrate facing the contact pad of the IC card when the IC card is inserted, the terminal being configured to form an electrical contact point with the contact pad of the IC card, and an antistatic pin grounded and protruding from the terminal on the surface of the substrate in a second direction opposite to the first direction, the antistatic pin being configured to come into electrical contact with the IC card earlier than the terminal when the IC card is inserted.

## Description

### [Technical Field]

Various embodiments disclosed herein relate to an electronic device and, more particularly, to an electronic device having an antistatic terminal.

### [Background Art]

An electronic device may be equipped with various IC cards. The IC cards may be, for example, a memory card for securing data storage space and/or a subscriber identification module (SIM) card for subscriber identification of a wireless communication network. An electronic device may have a slot for mounting an IC card. The IC card may be inserted into the slot in the state of being mounted on, for example, a tray. The slot may include at least one terminal that comes into electrical contact with the IC card.

Static charge may be charged on the IC card due to various causes such as friction. When the IC card is inserted into an electronic device, static charge is introduced into the electronic device through the terminal that comes into contact with the IC card, causing the electronic device to malfunction or fail. In order to reduce the inflow of static charge, the electronic device may include various filtering circuits such as a resistor, a capacitor, and/or a diode connected to the terminal.

### [Disclosure of Invention]

### [Technical Solution]

A filtering circuit for preventing the inflow of static charge may cause signal distortion due to radio-frequency communication between an IC card and an electronic device. In addition, when the area of a circuit board of an electronic device decreases for downsizing of the electronic device, a space for disposing a filtering circuit may be insufficient.

According to various embodiments disclosed herein, it is possible to provide an electronic device in which risk of malfunction and damage is reduced by removing static charge charged on an IC card.

An electronic device according to various embodiments is an electronic device into which an IC card including at least one contact pad on a first surface is inserted in a first direction. The electronic device may include a substrate, at least one terminal provided on a surface of the substrate facing the contact pad of the IC card when the IC card is inserted, the terminal being configured to form an electrical contact point with the contact pad of the IC card, and an antistatic pin grounded and protruding from the terminal on the surface of the substrate in a second direction opposite to the first direction, the antistatic pin being configured to come into electrical contact with the IC card earlier than the terminal when the IC card is inserted.

In various embodiments, a protruding height of the antistatic pin from the surface of the substrate may be higher than a protruding height of the terminal, and when the IC card is inserted, the antistatic pin may come into contact with the first surface of the IC card and may be elastically deformed.

In various embodiments, the protruding height of the antistatic pin from the surface of the substrate may be 120% or less of the protruding height of the terminal.

In various embodiments, the protruding height of the antistatic pin may be 105% or more of the protruding height of the terminal.

In various embodiments, the electronic device may include a plurality of antistatic pins.

In various embodiments, the IC card may include a plurality of contact pads provided in a plurality of areas on the first surface of the IC card and electrically isolated from each other when viewed in the first direction, and the plurality of antistatic pins may be respectively disposed at positions corresponding to the plurality of contact pads when viewed in the first direction.

In various embodiments, when viewed in the first direction, the antistatic pin may be disposed to be deviated from a portion of the terminal that comes into contact with the contact pad.

In various embodiments, the electronic device may further include a card tray configured to be mounted with the IC card and to be inserted into the electronic device in the state in which the IC card is mounted thereon, and the card tray may include a tray antistatic pad made of a conductive material and positioned at a front side of the card tray with reference to the first direction.

In various embodiments, the tray antistatic pad may be positioned to be aligned with the antistatic pin with reference to the first direction.

A card socket according to various embodiments is a card socket for an electronic device into which an IC card including at least one contact pad on a first surface is inserted in a first direction. The card socket may include a socket substrate, at least one terminal provided on a surface of the socket substrate facing the contact pad of the IC card when the IC card is inserted, the terminal being configured to form an electrical contact point with the contact pad of the IC card, and an antistatic pin grounded and protruding from the terminal on the surface of the socket substrate in a second direction opposite to the first direction, the antistatic pin being configured to come into electrical contact with the IC card earlier than the terminal when the IC card is inserted.

In various embodiments, the protruding height of the antistatic pin from the surface of the socket substrate may be higher than the protruding height of the terminal,

and when the IC card is inserted, the antistatic pin may come into contact with the first surface of the IC card and may be elastically deformed.

In various embodiments, the protruding height of the antistatic pin from the surface of the socket substrate may be 120% or less of the protruding height of the terminal.

In various embodiments, the protruding height of the antistatic pin may be 105% or more of the protruding height of the terminal.

In various embodiments, the card socket may include a plurality of antistatic pins.

In various embodiments, the IC card may include a plurality of contact pads provided in a plurality of areas on the first surface of the IC card and electrically isolated from each other when viewed in the first direction, and the plurality of antistatic pins may be respectively disposed at positions corresponding to the plurality of contact pads when viewed in the first direction.

In various embodiments, when viewed in the first direction, the antistatic pins may be disposed to be deviated from portions of the terminals that come into contact with the contact pads.

An electronic device according to various embodiments is an electronic device into which an IC card including at least one contact pad on a first surface is inserted in a first direction. The electronic device may include a card socket into which the IC cards are inserted in the first direction. The card socket may include a socket substrate, at least one terminal provided on a surface of the socket substrate facing the contact pad of the IC card when the IC card is inserted, the terminal being configured to form an electrical contact point with the contact pad of the IC card, and an antistatic pin grounded and protruding from the terminal on the surface of the socket substrate in a second direction opposite to the first direction, the antistatic pin being configured to come into electrical contact with the IC card earlier than the terminal when the IC card is inserted.

In various embodiments, the protruding height of the antistatic pin from the surface of the socket substrate may be higher than the protruding height of the terminal.

In various embodiments, the electronic device may further include a card tray configured to accommodate the plurality of IC cards and to be inserted into the card socket in the state of accommodating the plurality of IC cards.

In various embodiments, the card tray may be configured such that, among the plurality of IC cards, an IC card including a contact pad having a larger area is accommodated in the first direction of the card tray, and an IC card including a contact pad having a smaller area is accommodated in a second direction opposite to the first direction.

According to various embodiments disclosed herein, when an IC card is inserted, a ground terminal comes into contact the IC card and discharges static charge charged on the IC card. As a result, it is possible to reduce the risk of malfunction of and damage to the electronic device due to static charge.

### [Brief Description of Drawings]

In connection with the description of the drawings, the same or similar components may be denoted by the same or similar reference numerals.
FIG. 1 is a block diagram of an electronic device according to various embodiments in a network environment.
FIG. 2A illustrates a front view, a side view, and a plan view of the exterior of an electronic device according to various embodiments of the disclosure.
FIG. 2B is an exploded perspective view illustrating the inside of the electronic device according to various embodiments of the disclosure.
FIG. 3A is a plan view illustrating a card socket according to embodiments of the disclosure.
FIG. 3B is a plan view illustrating a socket substrate of the card socket according to embodiments of the disclosure.
FIG. 3C is a side view illustrating the socket substrate of the card socket according to embodiments of the disclosure.
FIG. 4A is a plan view illustrating a card tray and an IC card according to some embodiments of the disclosure.
FIG. 4B is a side view illustrating the card tray and the card socket according to some embodiments.
FIG. 4C is a side view illustrating the state in which the IC card is mounted in the card socket.
FIG. 4D is a plan view illustrating the card tray and the card socket according to some embodiments.
FIG. 5 is a graph showing, in comparison, current waveforms generated by electrical communication of electronic devices according to an embodiment of the disclosure and a comparative example with an IC card.
FIG. 6A is a plan view illustrating a tray 600 of an electronic device according to various embodiments of the disclosure.
FIGS. 6B and 6C are plan views illustrating an operation of inserting the card tray 600 into the card socket according to various embodiments.

### [Mode for the Invention]

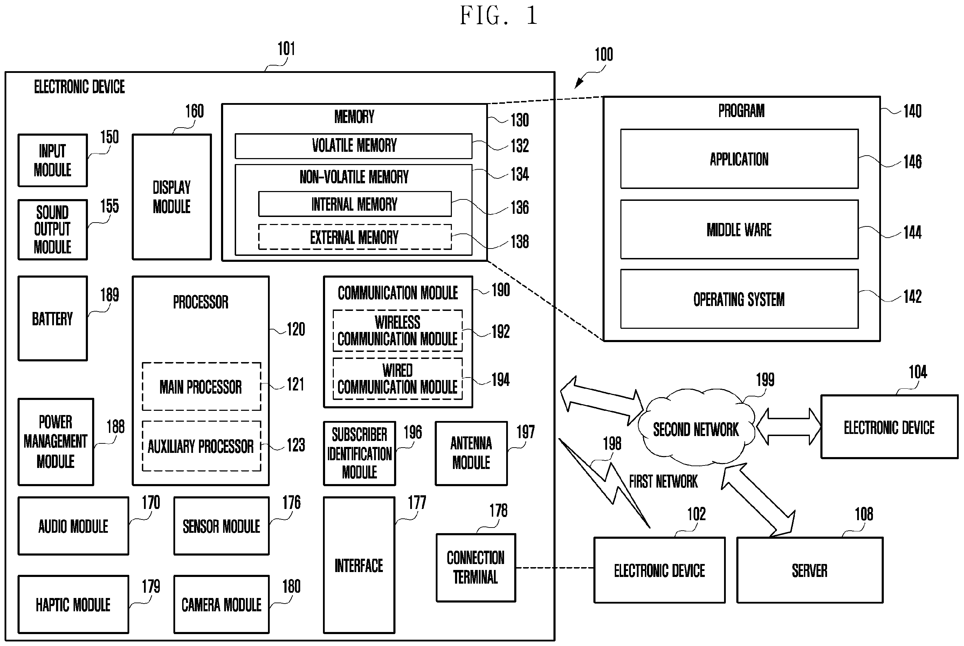

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example.

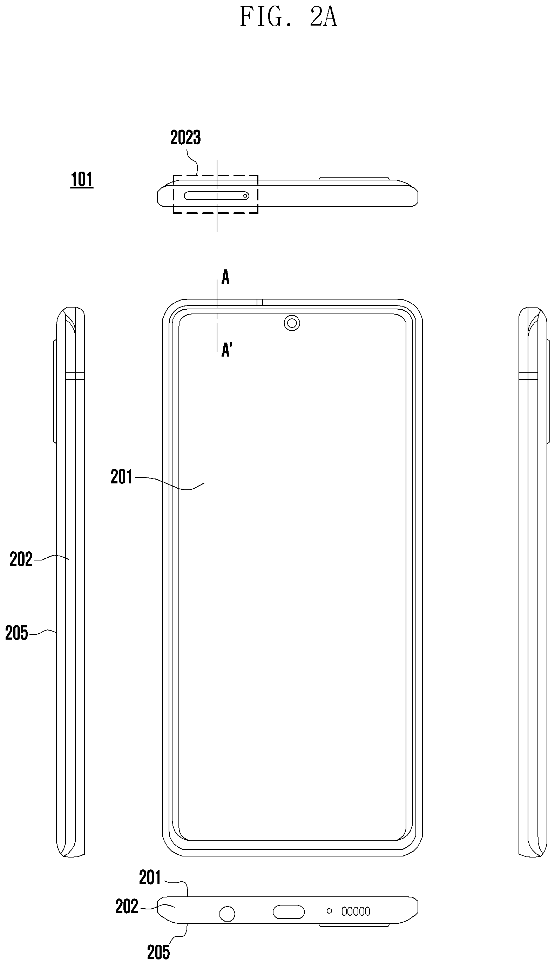

FIG. 2A illustrates a front view, a side view, and a plan view of the exterior of an electronic device 101 according to various embodiments of the disclosure.

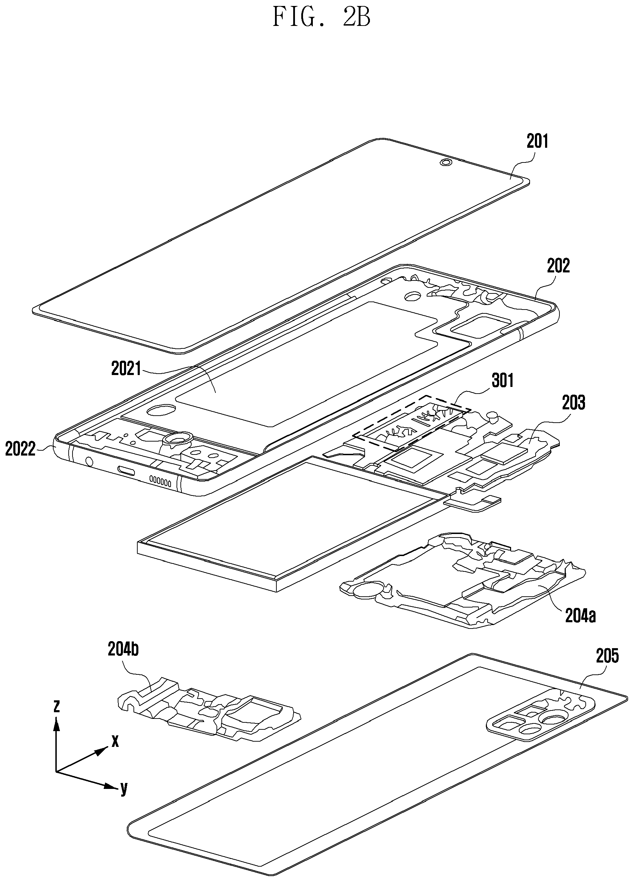

FIG. 2B is an exploded perspective view illustrating the interior of the electronic device 101 according to various embodiments of the disclosure.

Coordinate axes in the x-axis direction, the y-axis direction, and/or the z-axis direction may be indicated in FIG. 2B and the subsequent drawings. The x-axis and -x-axis directions in the drawings may be expressed as directions in which a card tray 301 is ejected and inserted with respect to the electronic device 101 or directions in which a push bar 510 to be described later slides, and the y-axis and -y-axis directions may be expressed as a lateral side or a lateral direction, and the z-axis and -z axis directions may be expressed as top and bottom sides or upward and downward directions.

Referring to FIGS. 2A and 2B, the electronic device 101 may include a display 201, a main body 202, a substrate 203, brackets 204a and 204b, and a rear surface cover 205.

The display 201 may include a display device 160 such as a TFT-LCD or an organic light-emitting diode display, a control circuit configured to control the display device, and a transparent cover configured to protect the display device. In some embodiments, the display 201 may further include a touch circuit configured to detect a user's touch input and/or a biometric sensor configured to recognize biometric information.

The main body 202 is configured to support the display 201 and may include an internal space in which a substrate 203 to be described later and various internal components of the electronic device 101 are placed. In some embodiments, the main body 202 may include an internal frame 2021 configured to support components of the electronic device 101 and an external frame 2022 configured to surround the internal frame 2021 in four directions. A slot 2023 into which an IC card and a card tray 400 to be described later are inserted may be provided on one side surface of the main body 202. The slot 2023 may have a rectangular, rounded-rectangular, or stadium-shaped cross-sectional shape, and the width and height of the slot 2023 may be greater than the width and thickness of the card tray 400 to be described later. The slot 2023 may be connected to an inlet of a card socket 301 to be described later inside the electronic device.

On the substrate 203, electrical components of the electronic device 101 such as the processor 120, the communication module 190, the memory 130, the sensor module 176, the camera module 180, and the battery 189 of FIG. 1 may be mounted and electrically connected to each other. A card socket 301 to be described later may be disposed on the substrate 203, and the IC card may be electrically connected to other components mounted on the substrate 203 via the card socket 301. The brackets 204a and 204b may support the substrate 203 and the components mounted on the substrate 203 with respect to the rear surface cover 205. The rear surface cover 205 protects the internal components of the electronic device 101 by covering the rear surface of the electronic device 101.

The IC card may be a flat electronic component including an integrated circuit. In some embodiments, the integrated circuit of the IC card may include a memory module to expand the capacity of the auxiliary memory of the electronic device 101, and the IC card may include a Secure Digital^{®} (SD) card, a trans flash (TF) card, a universal flash storage (UFS) card, or a memory card conforming to similar standards. In another embodiment, the IC card may be a subscriber identification module (SIM) card that stores subscriber information for identifying a subscriber of a wireless communication network. In FIG. 2B and the subsequent drawings, the IC card will be illustrated as being inserted into the electronic device in the direction opposite to the x-axis direction (the -x-axis direction). The IC card may be inserted into the card socket 301 in the state of being mounted on a card tray 400, which will be described later.

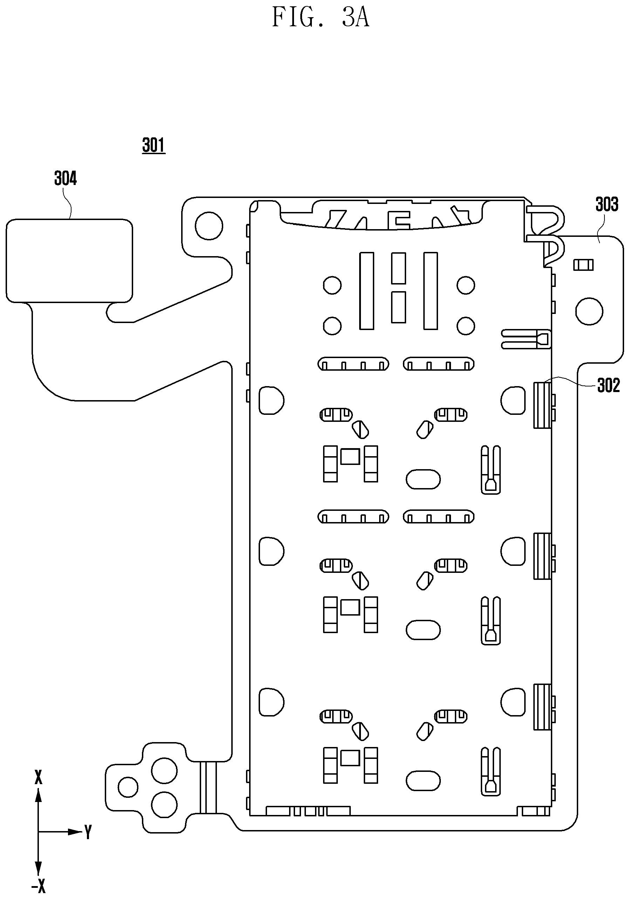

FIG. 3A is a plan view illustrating a card socket 301 according to embodiments of the disclosure.

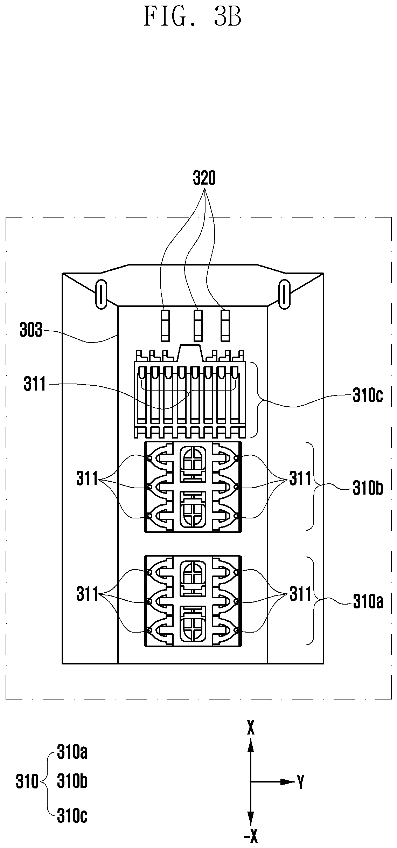

FIG. 3B is a plan view illustrating a socket substrate 303 of the card socket 301 according to embodiments of the disclosure.

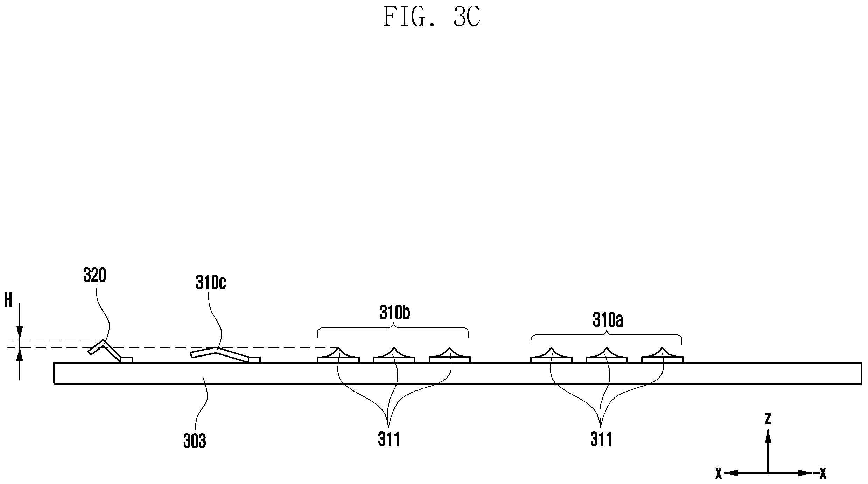

FIG. 3C is a side view illustrating the socket substrate 303 of the card socket 301 according to embodiments of the disclosure.

Referring to FIGS. 3A, 3B, and 3C, the card socket 301 may include a socket cover 302, a socket substrate 303, terminals 310, and antistatic pins 320.

The socket cover 302 may protect internal components of the card socket 301, may guide an IC card 501 when the IC card 501 is inserted, and may support one surface of the IC card 501. The socket cover 302 may be manufactured, for example, by bending a metal plate into a rectangular cross section.

The socket substrate 303 may be a substrate on which the terminals 310 and the antistatic pins 320, which will be described later, are disposed. In some embodiments, the socket substrate 303 may be an area (e.g., area A in FIG.2B) in which the terminals 310 and the antistatic pins 320, which will be described later, are disposed on the substrate (e.g., the substrate 203 of FIG. 2B) of the electronic device. In another embodiment, the socket substrate 303 may be configured as a separate substrate (e.g., a PCB, a FPCB, or a similar circuit board) separate from the substrate (e.g., the substrate 203 in FIG. 2B) and may be electrically connected to the substrate (e.g., the substrate 203 in FIG. 2B) via a connector 304.

The terminals 310 may be members that mediate power supply and communication between an IC card 501 and the electronic device by being disposed on the surface of the socket substrate 303 facing the IC card 501 to be described later and forming electrical contact points with the contact pads 510 of the IC card 501 to be described later. The terminals 310 may be disposed to protrude from the surface of the socket substrate 303. The socket substrate 303 may include a plurality of terminals 310a, 310b, and 310c to form electrical contact points with a plurality of IC cards 501. Contact point portions, which are portions that come into contact with the contact pads 510 of the IC cards 501, may be provided at the tips of the terminals 310.

The antistatic pins 320 may be disposed at positions spaced apart from the terminals 310 in the opposite direction (the x-axis direction) to the direction in which the IC cards are inserted into the socket (the -x-axis direction) on the surface of the socket substrate 303 on which the terminals 310 are disposed. The antistatic pins 320 may be members that come into contact with an IC card 501 before the IC card 501 and the terminals 310 come into contact with each other when the IC card 501 is inserted into the card socket 301, thereby discharging static charge charged on the IC card 501. By being grounded, the antistatic pins 320 may discharge the static charge charged on the IC card 501 to the ground. For example, the antistatic pins 320 may be connected directly or indirectly, via the connector 304, to a ground circuit provided on the substrate of the electronic device. The antistatic pins 320 may include an elastically deformable structure, for example, a spring contact structure.

Referring to FIG. 3C, in some embodiments, the antistatic pins 320 may protrude from the surface of the socket substrate 303 in a direction (the z-axis direction) perpendicular to the surface, and the protruding height of the antistatic pins 320 may be higher than the terminals 310. Since the antistatic pins 320 protrude from the surface of the socket substrate 303 to be higher than the terminals 310, it is possible to increase the probability that the antistatic pins 320 will come into contact with the socket substrate 303 first when the IC card 501 is inserted. Therefore, it is possible to reduce the risk of damage and/or malfunction of the electronic device 101 since the static charge charged on the IC card 501 is discharged through the terminals 310. A difference (H) in protruding height between the antistatic pins 320 and the terminals 310 may be 5% to 20% of the protruding height of the terminals 310. In the case where the antistatic pins 320 protrude to be higher than the terminals 310 by 10% or more, when the IC card 501 is inserted, the antistatic pins 320 may press the contact pads 510 of the IC card 501 with excessive pressure and may thus cause excessive wear and damage to the contact pads 510 of the IC card 501. In the case where the antistatic pins 320 protrude to be higher than the terminals 310 by less than 5%, the protruding height of the antistatic pins 320 is lowered due to the gradual deformation of the antistatic pins 320 due to the repeated insertion and removal of the IC card 501. As a result, the above-described effect of discharging static charge that is obtained as the antistatic pins 320 protrude to be higher than the terminals 310 may be reduced.

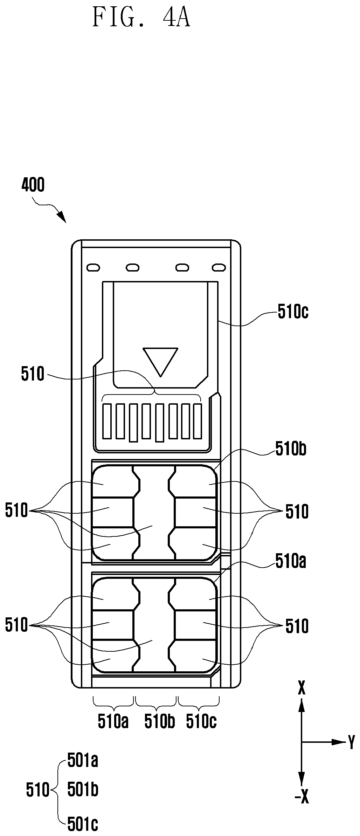

FIG. 4A is a plan view illustrating a card tray 400 and IC cards 501 according to some embodiments of the disclosure.

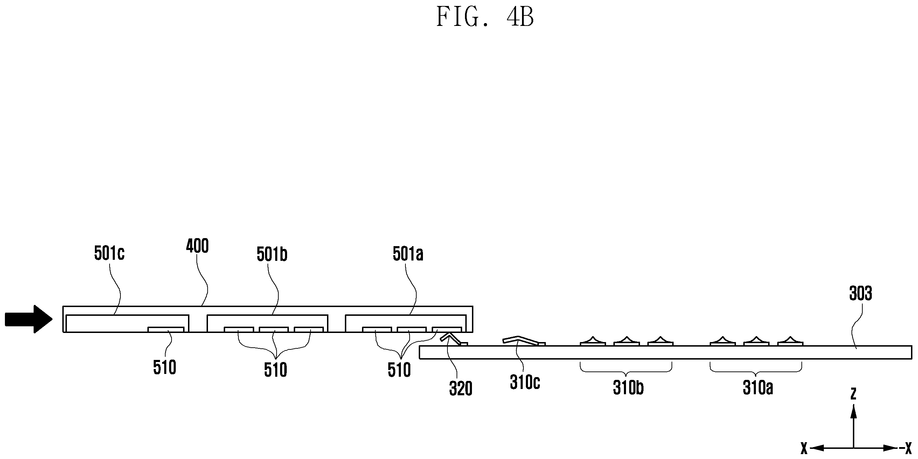

FIG. 4B is a side view illustrating the card tray 400 and the card socket 301 according to some embodiments.

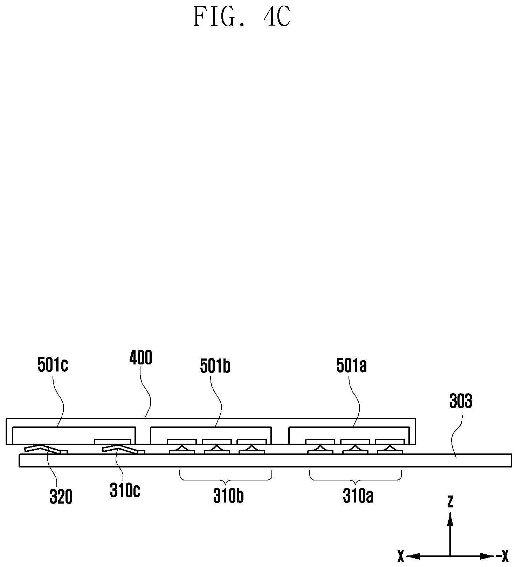

FIG. 4C is a side view illustrating the state in which the IC cards 501 are mounted on the card socket 301.

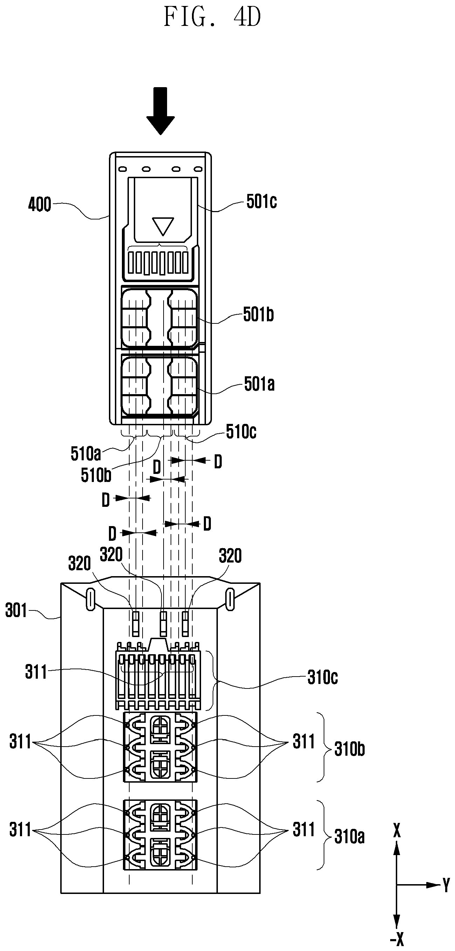

FIG. 4D is a plan view illustrating the card tray 400 and the card socket 301 according to some embodiments.

Referring to FIGS. 4A to 4C, the IC cards 501 may be inserted into an electronic device (e.g., the electronic device 101 of FIG. 2A ) in the state of being accommodated in the card tray 400. In various embodiments, the card tray 400 may accommodate a plurality of IC cards 501, for example, a first subscriber identification module (SIM) 501a, a second SIM 501b, and a memory card 501c (e.g., a TF or micro-SD card), but the disclosure is not limited thereto. The socket substrate 303 may include a plurality of terminals 310a, 310b, and 310c (e.g., first to third terminals 310a, 310b, and 310c) corresponding to the plurality of IC cards 501a, 501b, and 501c. In some embodiments, the card tray 400 may be configured such that IC cards 501 having a relatively larger contact pad 510 area (e.g., the first and second SIMs) are disposed in the front with reference to the insertion direction of the IC cards 501 (the -x-axis direction). The static charge charged on an IC card is concentrated on the surfaces of the contact pads 510, and the capacitance of a parasitic capacitor formed by the contact pads 510 increases as the area of the contact pads 510 increases. Therefore, among the contact pads 510, contact pads 510, which have a relatively large area, accumulate a large amount of charge. Thus, when charge flows into the electronic device through the terminals 310, there is a high risk of damage to the electronic device. Therefore, when the contact pads 510 are disposed in the front, it may be easy to discharge the charge since the contact pads 510 come into contact with the antistatic pins 320 first.

Referring to FIGS. 4B and 4C, when the card tray 400 and the IC cards 501 are inserted, the contact pads 510 of an IC card (e.g., the first SIM) may first come into contact with the antistatic pins 320 before coming into contact with other terminals 310 (e.g., the third terminals 310c) of the card socket 301. Therefore, static charge charged on an IC card 501 due to the contact of the terminals 310 with the IC card 501 may be discharged through the antistatic pins 320 first rather than flowing into a circuit of the electronic device via the terminals 310. The plurality of IC cards 501 first undergo a contact process with the antistatic pins 320 and then may come into electrical contact with the plurality of terminals 310a, 310b, and 310c, respectively, in the state in which static charge is discharged.

Referring back to FIG. 4A, the IC cards 501, for example, the first SIM and the second SIM may include a plurality of contact pads 510. The plurality of contact pads 510 may be divided into a plurality of contact areas when viewed in the insertion direction (the -x axis direction). For example, the contact pads 510 of the first SIM and the second SIM may be divided into three contact areas when viewed in the direction in which the first SIM and the second SIM are inserted. The antistatic pins 320 may be disposed on a substrate in consideration of positions of the three contact areas. This will be described with reference to FIG. 4D.

Referring to FIG. 4D, the plurality of antistatic pins 320 may be respectively disposed in areas corresponding to the plurality of contact areas when viewed in the direction in which the IC cards 501 are inserted. Different contact pads 510 of the IC cards 501 may be electrically separated from each other, and thus, even if one contact pad 510 comes into contact with an antistatic pin 320, the static charge of the other contact pads 510 may not be discharged. Since the plurality of antistatic pins 320 are respectively disposed in areas corresponding to the plurality of contact areas, all of the plurality of contact pads 510 electrically separated from each other may come into contact with the antistatic pins 320.

Referring back to FIG. 4D, when viewed in the direction in which the IC cards 501 are inserted (the -x-axis direction), the plurality of antistatic pins 320 may be disposed to be spaced apart from contact point portions 311, which are portions at which the terminals 310 (e.g., the first to third terminals 3 10a, 310b, and 310c) come into contact with the contact pads 510, respectively. In FIG. 4D, the paths in which the contact point portions 311 and the contact pads 510 come into contact with each other when the IC cards 501 are inserted are indicated by broken lines, and the paths in which the antistatic pins 320 and the contact pads 510 come into contact with each other are indicated by alternate long and short dash lines. As illustrated in FIG. 4D, the contact point portions 311 and the antistatic pins 320 are spaced apart from each other by a distance D, whereby the antistatic pins 320 may come into contact with the contact pads 510 at different portions of the contact pads 510 with reference to the direction in which the IC cards 501 are inserted. It will be apparent that the spaced distances D between the contact point portions 311 and the antistatic pins 320 are not necessarily uniform and may vary according to design needs.

Wear may occur due to repeated friction between the antistatic pins 320 and/or terminals 310 and the contact pads 510 due to repeated insertion and ejection of the IC cards 501. When the antistatic pins 320 and the terminals 310 are aligned with each other with reference to the insertion direction of the IC cards 501, wear of the contact pads 510 increases due to friction with the antistatic pins 320. Accordingly, electrical contact between the terminals 310 and the contact pads 510 may be poor. The antistatic pins 320 and the terminals 310 spaced apart from each other may reduce wear described above, thereby reducing poor contact between the IC cards 501 and the terminals 310.

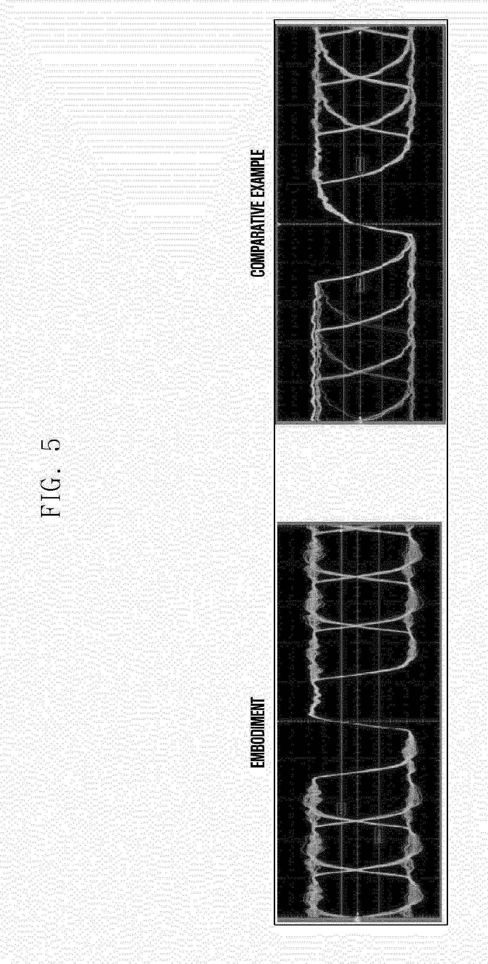

FIG. 5 is a graph showing, in comparison, current waveforms generated by electrical communication of electronic devices according to an embodiment of the disclosure and a comparative example with an IC card 501.

The electronic device according to the comparative example of FIG. 5 is an electronic device which does not include the antistatic pins 320 of the disclosure, and to which a static charge reduction circuit is added to each terminal 310 to reduce the effect of static charge charged on an IC card 501.

Referring to FIG. 5, it can be seen that distortion of a current signal occurred in the electronic device according to the comparative example during communication with the IC card 501. This may be caused by the impedance of the static charge reduction circuit. In contrast, it can be seen that the electronic device according to an embodiment of the disclosure has relatively less signal distortion than the comparative example. This may be because, in the electronic device according to an embodiment of the disclosure, static charge is discharged by the antistatic pins 320, and therefore, a separate static charge reducing circuit is not added to the terminals 310. Therefore, according to the disclosure, it is possible to provide an electronic device in which electrical components of the electronic device are protected by discharging static charge charged to the IC card 501 by the antistatic pins 320 while signal distortion is relatively low.

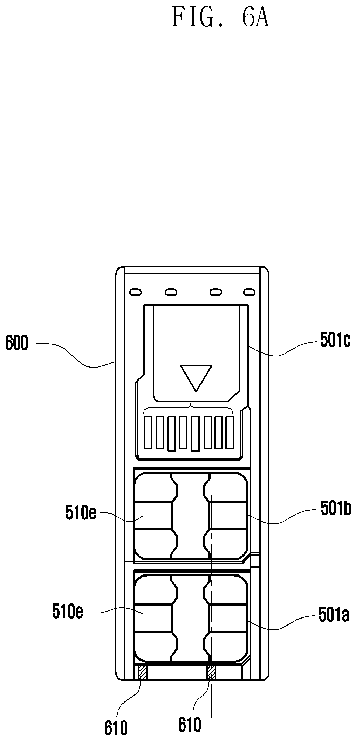

FIG. 6A is a plan view illustrating a tray 600 of an electronic device according to various embodiments of the disclosure.

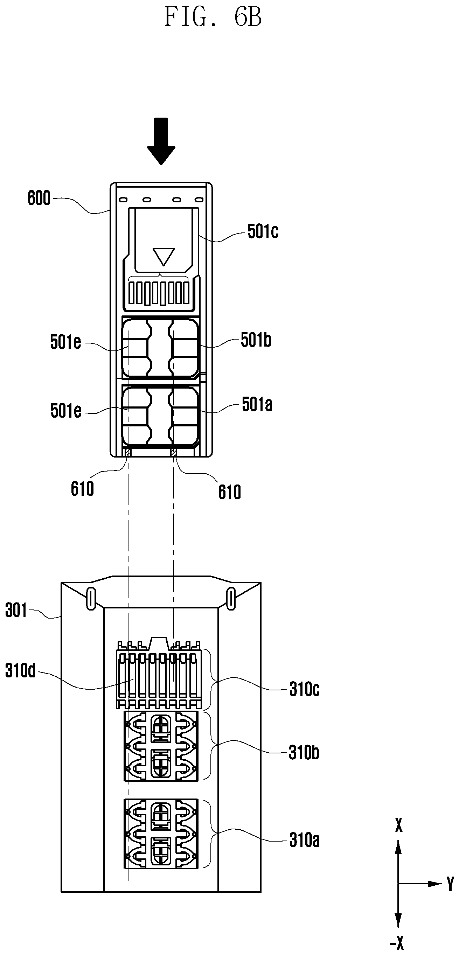

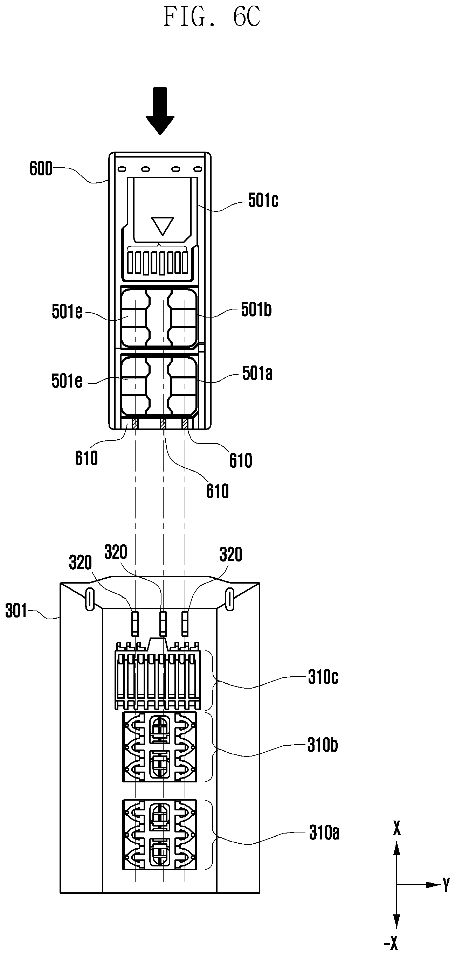

FIGS. 6B and 6C are plan views illustrating an operation of inserting the card tray 600 into the card socket according to various embodiments.

Referring to FIG. 6A, in various embodiments, the card tray 600 may include tray antistatic pads 610. The tray antistatic pads 610 may be disposed in front of an area of the card tray 600 in which IC cards 501a, 501b, and 501c are disposed with reference to the direction in which the card tray 600 is inserted. The tray antistatic pads 610 may include a conductive material such as a metal material. When the card tray 600 is inserted into a card socket inside an electronic device, not only the IC cards mounted on the card tray 600 but also the card tray 600 itself may be charged, which causes a risk of damaging the electronic device into which the card tray 600 is inserted. The card tray 600 including the tray antistatic pads 610 may protect the electronic device by discharging static charge charged on the card tray 600 through the tray antistatic pads 610.

Referring to FIG. 6B, the tray antistatic pad 610 may be disposed to be aligned with ground terminals 310d and 310e of the card socket when viewed in the direction in which the IC cards are inserted. Accordingly, the tray antistatic pads 610 may be disposed to be aligned with the ground pads 510d and 510e of the IC cards corresponding to the ground terminals 310d and 310e. The ground terminals 310d and 310e may include, for example, memory card ground terminals 310d responsible for grounding the memory card and/or SIM ground terminals 310e responsible for grounding the SIM module. By aligning the tray antistatic pads 610 with the ground terminals 310d and 310e, when the card tray is inserted into the electronic device, the tray antistatic pads 610 come into contact with the ground terminals 3 10d and 310e, thereby safely discharging static charge charged on the card tray.

Referring to FIG. 6C, the tray antistatic pads 610 may be disposed to be aligned with the antistatic pins 320 when viewed in the direction in which the IC cards are inserted. Since the tray antistatic pads 610 are aligned with the antistatic pins 320, when the card tray 600 is inserted into the electronic device, the tray antistatic pads 610 come into contact with the antistatic pins 320, thereby safely discharging static charge charged on the card tray 600.

An electronic device according to various embodiments is an electronic device(e.g. electronic device(101) of FIGS. 1 to 2b) into which an IC card 501 comprising at least one contact pad 510 provided on a first surface is inserted in a first direction. The electronic device may include a substrate 203, at least one terminal 310 provided on a surface of the substrate 203 facing the contact pad 510 of the IC card 501 in case that the IC card 501 is inserted, the terminal 310 being configured to form an electrical contact with the contact pad 510 of the IC card 501, and an antistatic pin 320 grounded and protruding from the terminal 310 on the surface of the substrate 203 in a second direction opposite to the first direction, the antistatic pin 320 being configured to come into electrical contact with the IC card 501 earlier than the terminal 310 in case that the IC card 501 is inserted.

In various embodiments, a protruding height of the antistatic pin 320 from the surface of the substrate 203 may be higher than a protruding height of the terminal 310, and in case that the IC card 501 is inserted, the antistatic pin 320 may come into contact with the first surface of the IC card 501 and is elastically deformed.

In various embodiments, the protruding height of the antistatic pin 320 from the surface of the substrate 203 may be 120% or less of the protruding height of the terminal 310.

In various embodiments, the protruding height of the antistatic pin 320 from the surface of the substrate 203 may be 110% or less of the protruding height of the terminal 310.

In various embodiments, the protruding height of the antistatic pin 320 may be 105% or more of the protruding height of the terminal 310.

In various embodiments, the electronic device may comprise a plurality of antistatic pins 320.

In various embodiments, the IC card 501 may comprise a plurality of contact pads 510a, 510b, 510c provided in a plurality of areas on the first surface of the IC card 501 and electrically isolated from each other in a view in the first direction, and the plurality of antistatic pins 320 may be respectively disposed at positions corresponding to the plurality of contact pads 510a, 510b, 510c in a view in the first direction.

In various embodiments, in a view in the first direction, the antistatic pin 320 is disposed to be deviated from a portion of the terminal 310 that comes into contact with the contact pad 510.

In various embodiments, the electronic device may further comprise a card tray 600 on which the IC card 501 is mounted, the card tray 600 being configured to be inserted into the electronic device in a state in which the IC card 501 is mounted thereon, wherein the card tray 600 may comprise a tray antistatic pad 610 made of a conductive material and positioned in a front portion of the card tray 600 with reference to the first direction.

In various embodiments, the tray antistatic pad 610 may be positioned to be aligned with the antistatic pin 320 with reference to the first direction.

A card socket according to various embodiments is a card socket 310 for an electronic device into which an IC card 501 comprising at least one contact pad 510 provided on a first surface is inserted in a first direction, the card socket 310 may comprise: a socket substrate 203, at least one terminal 310 provided on a surface of the socket substrate 203 facing the contact pad 510 of the IC card 501 in case that the IC card 501 is inserted, the terminal 310 being configured to form an electrical contact point with the contact pad 510 of the IC card 501, and an antistatic pin 320 grounded and protruding from the terminal 310 on the surface of the socket substrate 203 in a second direction opposite to the first direction, the antistatic pin 320 being configured to come into electrical contact with the IC card 501 earlier than the terminal 310 in case that the IC card 501 is inserted.

In various embodiments, a protruding height of the antistatic pin 320 from the surface of the socket substrate 203 may be higher than a protruding height of the terminal 310, and in case that the IC card 501 is inserted, the antistatic pin 320 may come into contact with the first surface of the IC card 501 and may be elastically deformed.

In various embodiments, the protruding height of the antistatic pin 320 from the surface of the socket substrate 203 may be 120% or less of the protruding height of the terminal 310.

In various embodiments, the protruding height of the antistatic pin 320 may be 105% or more of the protruding height of the terminal 310.

In various embodiments, the card socket 310 may comprise a plurality of antistatic pins 320.

In various embodiments, the IC card 501 may comprise a plurality of contact pads 510a, 510b, 510c provided in a plurality of areas on the first surface of the IC card 501 and electrically isolated from each other in a view in the first direction, and the plurality of antistatic pins 320 may be respectively disposed at positions corresponding to the plurality of contact pads 510a, 510b, 510c in a view in the first direction.

In various embodiments, in a view in the first direction, the antistatic pins 320 may be disposed to be deviated from portions of the terminal 310s that come into contact with the contact pads 510.

An electronic device according to various embodiments is an electronic device into which a plurality of IC card 501s comprising at least one contact pad 510 provided on a first surface may be inserted in a first direction. The electronic device may comprise a card socket 310 into which the IC card 501s may be inserted in the first direction,
wherein the card socket 310 may comprise: a socket substrate 203, at least one terminal 310 provided on a surface of the socket substrate 203 facing the contact pad 510 of the IC card 501 in case that the IC card 501 is inserted, the terminal 310 being configured to form an electrical contact with the contact pad 510 of the IC card 501, and an antistatic pin 320 grounded and protruding from the terminal 310 on the surface of the socket substrate 203 in a second direction opposite to the first direction, the antistatic pin 320 being configured to come into electrical contact with the IC card 501 earlier than the terminal 310 in case that the IC card 501 is inserted.

In various embodiments, a protruding height of the antistatic pin 320 from the surface of the socket substrate 203 may be higher than a protruding height of the terminal 310.

In various embodiments, the electronic device may further comprise a card tray 600 configured to accommodate a plurality of IC card 501s and inserted into the card socket 310 in a state of accommodating the plurality of IC card 501s.

In various embodiments, the card tray 600 may be configured such that, among the plurality of IC card 501s, an IC card 501 comprising a contact pad 510 having a larger area may be accommodated in the first direction of the card tray 600, and an IC card 501 comprising a contact pad 510 having a smaller area may be accommodated in a second direction opposite to the first direction.

The embodiments disclosed in the specification and drawings are provided merely to easily describe the technical features according to the embodiments disclosed herein and to help understanding of the embodiments disclosed herein and are not intended to limit the scope of the embodiments disclosed herein. Therefore, the scope of the various embodiments disclosed herein should be construed in such a manner that, in addition to the embodiments disclosed herein, all changes or modifications derived from the technical idea of the various embodiments disclosed herein are included in the scope of the various embodiments disclosed herein.

## Claims

1. An electronic device into which an IC card comprising at least one contact pad provided on a first surface is inserted in a first direction, the electronic device comprising:
a substrate;
at least one terminal provided on a surface of the substrate facing the contact pad of the IC card in case that the IC card is inserted, the terminal being configured to form an electrical contact with the contact pad of the IC card; and
an antistatic pin grounded and protruding from the terminal on the surface of the substrate in a second direction opposite to the first direction, the antistatic pin being configured to come into electrical contact with the IC card earlier than the terminal in case that the IC card is inserted.

2. The electronic device of claim 1, wherein a protruding height of the antistatic pin from the surface of the substrate is higher than a protruding height of the terminal, and
wherein in case that the IC card is inserted, the antistatic pin comes into contact with the first surface of the IC card and is elastically deformed.

3. The electronic device of claim 2, wherein the protruding height of the antistatic pin from the surface of the substrate is 120% or less of the protruding height of the terminal and 105% or more of the protruding height of the terminal.

4. The electronic device of claim 2, wherein the protruding height of the antistatic pin is 110% or less of the protruding height of the terminal and 105% or more of the protruding height of the terminal.

5. The electronic device of claim 1, wherein the electronic device comprises a plurality of antistatic pins.

6. The electronic device of claim 5, wherein the IC card comprises a plurality of contact pads provided in a plurality of areas on the first surface of the IC card and electrically isolated from each other in a view in the first direction, and
the plurality of antistatic pins are respectively disposed at positions corresponding to the plurality of contact pads in a view in the first direction.

7. The electronic device of claim 1, further comprising a card tray on which the IC card is mounted, the card tray being configured to be inserted into the electronic device in a state in which the IC card is mounted thereon,
wherein the card tray comprises a tray antistatic pad made of a conductive material and positioned in a front portion of the card tray with reference to the first direction, and
wherein, in a view in the first direction, the antistatic pin is disposed to be deviated from a portion of the terminal that comes into contact with the contact pad.

8. The electronic device of claim 7, wherein the tray antistatic pad is positioned to be aligned with the antistatic pin with reference to the first direction.

9. A card socket for an electronic device into which an IC card comprising at least one contact pad provided on a first surface is inserted in a first direction, the card socket comprising:
a socket substrate;
at least one terminal provided on a surface of the socket substrate facing the contact pad of the IC card in case that the IC card is inserted, the terminal being configured to form an electrical contact point with the contact pad of the IC card; and
an antistatic pin grounded and protruding from the terminal on the surface of the socket substrate in a second direction opposite to the first direction, the antistatic pin being configured to come into electrical contact with the IC card earlier than the terminal in case that the IC card is inserted.

10. The card socket of claim 9, wherein a protruding height of the antistatic pin from the surface of the socket substrate is higher than a protruding height of the terminal, and
wherein in case that the IC card is inserted, the antistatic pin comes into contact with the first surface of the IC card and is elastically deformed.

11. The card socket of claim 10, wherein the protruding height of the antistatic pin from the surface of the socket substrate is 120% or less of the protruding height of the terminal.

12. The card socket of claim 10, wherein the protruding height of the antistatic pin is 105% or more of the protruding height of the terminal.

13. The card socket of claim 9, wherein the card socket comprises a plurality of antistatic pins.

14. The card socket of claim 13, wherein the IC card comprises a plurality of contact pads provided in a plurality of areas on the first surface of the IC card and electrically isolated from each other in a view in the first direction,
wherein the plurality of antistatic pins are respectively disposed at positions corresponding to the plurality of contact pads in a view in the first direction,
wherein, in a view in the first direction, the antistatic pins are disposed to be deviated from portions of the terminals that come into contact with the contact pads, and
wherein, in a view in the first direction, the antistatic pins are disposed to be deviated from portions of the terminals that come into contact with the contact pads.

15. An electronic device into which a plurality of IC cards comprising at least one contact pad provided on a first surface are inserted in a first direction, the electronic device comprising
a card socket into which the IC cards are inserted in the first direction,
wherein the card socket comprises:
a socket substrate;
at least one terminal provided on a surface of the socket substrate facing the contact pad of the IC card in case that the IC card is inserted, the terminal being configured to form an electrical contact with the contact pad of the IC card; and
an antistatic pin grounded and protruding from the terminal on the surface of the socket substrate in a second direction opposite to the first direction, the antistatic pin being configured to come into electrical contact with the IC card earlier than the terminal in case that the IC card is inserted.
